# FASCICULE DE BREVET EUROPEEN

(11) **EP 0 516 559 B1**
(45) Date de publication et mention de la délivrance du brevet: **26.07.1995**
(21) Numéro de dépôt: 92420158.5
(22) Date de dépôt: 15.05.1992
(51) Int. Cl.: B23K 11/14, B23K 11/18

(54) **Procédé d'assemblage par soudage de deux pièces massives en cuivre**
Verfahren zum Schweissen von Kupferteilen
Method for welding two copper pieces

(30) Priorité: 21.05.1991 FR 9106306
(43) Date de publication de la demande: 02.12.1992
(73) Titulaire: SCHNEIDER ELECTRIC SA, 92100 Boulogne Billancourt (FR)
(72) Inventeur: Favre-Tissot, Jean-Paul, F-38050 Grenoble Cedex 9 (FR)
(74) Mandataire: Ritzenthaler, Jacques

(56) Documents cités:
- EP-A- 0 148 051
- 'METALS HANDBOOK, vol. 6, édition 9, pages 503-524' 1983 , AMERICAN SOCIETY FORMETALS , OHIO, US
- 'Metals handbook vol. 6, édition 9, pages 548-556' 1983 , AMERICAN SOCIETY FORMETALS , OHIO, US
- WELDING AND METAL FABRICATION. vol. 55, no. 7, Octobre 1987, HAYWARDS HEATH GBpages 365 - 368; L.D. CONNEL: 'Evolution of resistance welding'

## Description

L'invention est relative à un procédé d'assemblage par soudage sans métal d'apport d'une première et d'une deuxième pièces massives en cuivre selon le préambule de la revendication 1.

Dans l'appareillage électrique de nombreuses pièces massives sont en cuivre, dont la bonne conduction électrique est bien connue. Tous les assemblages de ces pièces massives en cuivre, destinées notamment à des amenées de courant, nécessitent une liaison à chaud par brasage. Le métal d'apport est généralement un alliage à base d'argent dont le point de fusion est inférieur à celui du cuivre et l'opération est délicate. Le cuivre est forcément chauffé et il subit une transformation physique de recuit, ainsi qu'une altération externe due à la calamine de brasage. Les pièces doivent ensuite être nettoyées et traitées chimiquement pour récupérer leur aspect original. Le cuivre récupère une partie de sa dureté dans le temps.

D'après les documents "Metals Handbook", Vol. 6, Edition 9, pages 503-524 et 548-556, publié en 1983 par American Society for Metals, Ohio, U.S.A, et "Welding and Metal Fabrication" Vol. 55, No. 7 pages 365-368, publié en Octobre 1987 par Haywards Health GB, il est connu un procédé d'assemblage par soudage sans métal d'apport d'une première et d'une deuxième pièces de cuivre dont au moins la première pièce est en forme de plaque ou de barre et présente une face antérieure d'assemblage à la deuxième pièce et une face postérieure opposée à la face antérieure, le procédé comportant les phases suivantes :
- conformation de la première pièce pour constituer sur ladite face antérieure de la première pièce un bossage et sur ladite face postérieure de la première pièce une cavité conjuguée et de section inférieure à celle du bossage,
- conformation de la deuxième pièce pour constituer un bossage à un emplacement d'assemblage à la première pièce,
- mise en place de la première pièce sur une presse à souder par résistance ayant une première et deuxième électrodes à base de cuivre, ladite face antérieure faisant face à la deuxième électrode, et la face postérieure étant appliquée contre la première électrode,
- mise en place de la deuxième pièce sur la deuxième électrode de la presse à souder, les deux bossages étant disposés dans l'axe de la presse et amenés au contact ponctuel,
- chauffage des deux pièces par passage d'un courant électrique entre la première et la deuxième électrodes de façon que le courant passe par la première pièce, par les deux bossages au contact et par la deuxième pièce,
- compression des deux pièces en appliquant une pression par la première et/ou la deuxième électrodes pour écraser les deux bossages et provoquer le soudage.

La présente invention a pour but de permettre la réalisation d'assemblages de pièces de cuivre massives par un procédé simple, n'utilisant aucun métal d'apport et maîtrisant l'échauffement dans la zone de contact entre l'électrode et la pièce.

Le procédé d'assemblage selon l'invention est décrit à la revendication 1.

Le procédé est réalisé sur une presse à souder par résistance, le chauffage des pièces étant localisé dans la zone des bossages. La faible résistance électrique du cuivre, rend particulièrement difficile son chauffage par un passage du courant et selon l'invention, cette difficulté est levée par une concentration du passage du courant dans une zone limitée, en l'occurrence le point de contact entre les deux bossages. L'échauffement ainsi localisé dans la zone des bossages provoque la fusion de ces derniers, et sous l'action de la pression de la presse à souder, les bossages sont déformés et aplatis pour amener au contact les deux pièces. On réalise ainsi un soudage des deux pièces sans aucun métal d'apport et sans risque de recuit ou de souillure du cuivre. L'intensité du courant de soudage ainsi que la pression de soudage et la durée de passage du courant dépendent bien entendu des formes et des dimensions des pièces à assembler, mais à titre d'exemple, on peut réaliser un assemblage entre deux barres de cuivre d'amenée de courant, en faisant passer un courant de l'ordre de 100.000 ampères pendant un temps très court, par exemple de l'ordre d'un dixième de seconde. Les pièces sont soumises pendant l'opération de soudage à une pression de quelques centaines de décanewton. La très courte durée de passage du courant limite la dispersion de la chaleur et l'échauffement d'une partie notable de la pièce.

La difficulté à vaincre est l'échauffement des électrodes de la presse et de la zone de contact entre les électrodes et la pièce. Les électrodes sont à base de cuivre, en particulier en cuprochrome et présentent donc une faible résistance électrique et un échauffement réduit. L'échauffement dans la zone de contact est maîtrisé en assurant une surface de contact annulaire due à l'empreinte en forme d'anneau ménagée, selon l'invention, autour de la cavité de la face postérieure de la pièce. La pression de contact est ainsi répartie uniformément sur une zone annulaire en évitant des contacts ponctuels, source d'échauffement et de soudure locale. Le diamètre de l'empreinte est par exemple voisin de la moitié du diamètre de l'électrode et sa profondeur de quelques dixièmes de millimètres.

Le bossage est avantageusement en forme de calotte sphérique d'une hauteur de quelques millimètres, et dans le cas d'une pièce en forme de barre ou de plaque, il est avantageusement réalisé par une opération d'emboutissage qui fait apparaître sur la face opposée une cavité conjuguée. Les deux pièces ou plaques à assembler sont placées l'une sur l'autre avec leur bossage en regard et en contact par leur sommet, avant d'être insérées entre les électrodes de la presse. Les électrodes sont ensuite appliquées sur les pièces avec une pression insuffisante pour déformer notablement les bossages. Cette déformation intervient par contre pendant le passage du courant qui provoque un échauffement par résistance des bossages et une fusion locale du cuivre. Le procédé de soudage selon l'invention convient particulièrement à l'assemblage de barres ou de plaques pouvant avoir des épaisseurs de plusieurs centimètres, mais il est applicable à des pièces de formes différentes, notamment des pièces de révolution dont l'extrémité doit être assemblée à une autre pièce, elle-même en forme de tige ou en forme de plaque. Le bossage est alors réalisé par toute manière appropriée, par exemple par simple usinage, et les électrodes de la presse à souder sont adaptées à la forme de cette pièce en étant par exemple agencées en étau ayant des mâchoires de serrage de la pièce. Dans ce cas la face de serrage de la pièce par les mâchoires est choisie suffisamment importante pour éviter tout contact ponctuel. Cette force ne s'exerce pas dans la direction des bossages et le risque d'un écrasement prématuré de ces bossages est donc écarté.

D'autres avantages et caractéristiques ressortiront plus clairement de la description qui va suivre, d'un mode de mise en oeuvre de l'invention, donné à titre d'exemple non limitatif et représenté aux dessins annexés dans lesquels :
La figure 1 est une vue schématique d'une presse à souder, les deux pièces à assembler étant insérées entre les deux électrodes avant l'opération de soudage.
La figure 2 est une vue en coupe à échelle agrandie des deux pièces selon la figure 1.
La figure 3 est une vue selon la ligne 3-3 de la figure 2.
La figure 4 est une vue analogue à celle de la figure 1 illustrant une variante de réalisation.
La figure 5 est une vue selon la ligne 5-5 de la figure 4.

Sur les figures, une presse à souder 10 comporte une électrode inférieure fixe 11 et une électrode supérieure mobile 12, qui peut être amenée au contact de l'électrode inférieure 11 par un mécanisme non représenté. Sur la face 13 de l'électrode inférieure 11 est posée une deuxième pièce à assembler 14 en forme de barre, dont la face opposée à celle posée sur l'électrode 11 présente un bossage 15. Une première pièce à assembler 16 est posée sur la deuxième pièce 14 et elle présente également un bossage 17 qui est en appui au contact du bossage 15 de la pièce opposée. La première pièce 16 est également en forme de barre ou de plaque et le seul contact électrique entre les deux pièces à assembler 14,16 est au niveau des bossages 15,17. Les électrodes 11,12 sont reliées à une source de courant 18 de forte intensité et l'opération de soudage est réalisée par fermeture des électrodes 11,12 et application d'une forte pression, par exemple de quelques centaines de décanewton. Dès la fermeture de la presse, on fait passer un courant de forte intensité entre les électrodes 11,12 et les pièces 14,16 en maintenant la pression et il est facile de voir que le courant passe obligatoirement par la zone de contact entre les bossages 15,17 avec une concentration dans cette zone qui provoque un échauffement local ainsi qu'une fusion du métal formant les bossages. La durée est extrêmement courte, par exemple de quelques dizièmes de secondes, ce qui évite tout échauffement excessif des pièces à assembler 14,16. A titre d'exemple, on peut préciser que deux plages d'amenée de courant en forme de barre peuvent être assemblées en prévoyant un passage du courant de 90.000 Ampères pendant un dizième de seconde sous une pression de serrage des pièces de 750 décanewton. Ces valeurs sont bien entendu fonction de la forme et de l'épaisseur des pièces à assembler 14,16.

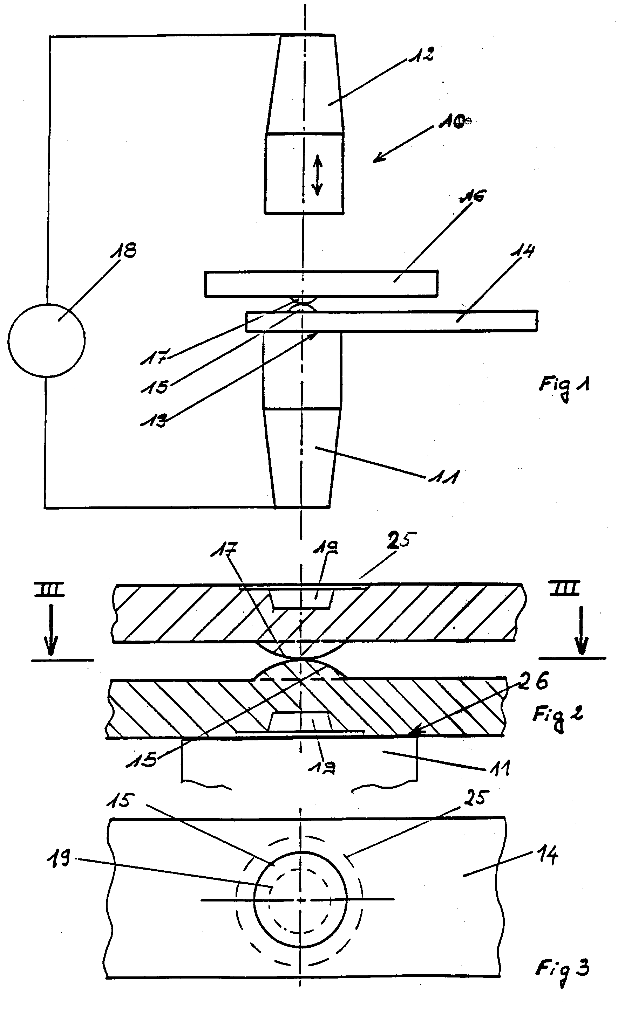

Les bossages peuvent être réalisés par tout moyen approprié, l'un de ces moyens étant un simple emboutissage d'une pièce en forme de barre ou de plaque, lequel emboutissage fait apparaître sur la face opposée au bossage une cavité conjuguée 19 de section inférieure à celle du bossage 15, 17. Les figures 2 et 3 représentent des bossages 15,17 en forme de calotte sphérique réalisée par emboutissage, mais il est clair que la forme des bossages 15,17 peut être différente, la seule obligation étant une zone de contact quasi-ponctuelle. Autour de chaque cavité 19 est ménagée une empreinte 25 en forme d'anneau de faible profondeur, de façon que l'électrode 11, 12, dont la section est supérieure à celle de l'empreinte 25, porte sur le pourtour 26 de l'empreinte 25 sur une surface répartie réduite. Le diamètre de l'empreinte 25 est supérieur à celui du bossage 15, 17 et par exemple voisin de la moitié de celui de l'électrode 11, 12. La profondeur de l'empreinte 25 est faible, par exemple de quelques dixièmes de millimètres.

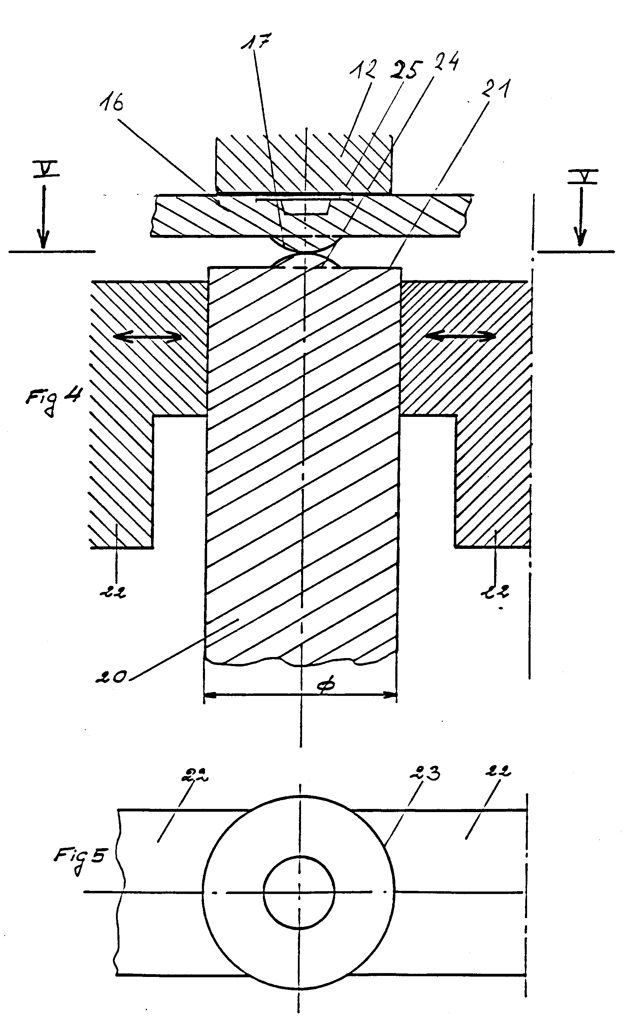

Les figures 4 et 5 illustrent une variante de réalisation permettant l'assemblage d'une pièce de révolution 20 par son extrémité 21 avec une barre 16. La longueur de la pièce 20 empêche son insertion entre les deux électrodes 11,12 d'une presse standard, et selon l'invention l'électrode inférieure est agencée en forme d'étau ayant des mâchoires 22 dont les mors 23 sont conformés pour épouser la surface de révolution de la pièce 20. La face d'extrémité 21 de la pièce de révolution 20 présente un bossage 24 sur lequel est appuyé le bossage 17 de la pièce 16. L'opération de soudage s'éffectue de la manière précitée et permet une fixation de la barre 16 sur l'extrémité de la pièce de révolution 20. L'assemblage de pièces de formes différentes est bien entendu possible, la seule obligation étant un bon contact électrique et mécanique entre les pièces et les électrodes pour éviter un soudage des pièces sur les électrodes.

L'invention est bien entendu applicable à des pièces à base de cuivre, notamment à des alliages de cuivre, et les paramètres optimaux de soudage peuvent être facilement sélectionnés par une étude cristallographique de la soudure. Le chauffage local de très courte durée évite un recuit du cuivre qui conserve toutes ses propriétés mécaniques, et l'absence de métal d'apport évite toute calamine ou autres impuretés affectant éventuellement les qualités de contact électrique avec d'autres pièces.

## Revendications

1. Procédé d'assemblage par soudage sans métal d'apport d'une première (16) et d'une deuxième (14, 20) pièces massives de cuivre dont au moins la première pièce (16) est en forme de plaque ou de barre et présente une face antérieure d'assemblage à la deuxième pièce (14, 20) et une face postérieure opposée à la face antérieure, comportant les phases suivantes :
- conformation de la première pièce (16) pour constituer sur ladite face antérieure de la première pièce un bossage (17) et sur ladite face postérieure de la première pièce une cavité (19) conjuguée et de section inférieure à celle du bossage (17),
- conformation de la deuxième pièce (14, 20) pour constituer un bossage (15, 24) à un emplacement d'assemblage à la première pièce (16),
- mise en place de la première pièce (16) sur une presse à souder par résistance ayant une première (12) et deuxième (11) électrodes à base de cuivre, ladite face antérieure faisant face à la deuxième électrode, et la face postérieure étant appliquée contre la première électrode,
- mise en place de la deuxième pièce (14, 20) sur la deuxième électrode (11, 22) de la presse à souder, les deux bossages étant disposés dans l'axe de la presse et amenés au contact ponctuel,
- chauffage des deux pièces par passage d'un courant électrique entre la première (12) et la deuxième (11) électrodes de façon que le courant passe par la première pièce, par les deux bossages au contact et par la deuxième pièce,
- compression des deux pièces en appliquant une pression par la première et/ou la deuxième électrodes pour écraser les deux bossages et provoquer le soudage,
caractérisé en ce que :
- la phase de conformation de la première pièce (16) comporte en outre la réalisation d'une empreinte (25) en forme d'anneau de profondeur limitée entourant ladite cavité (19), et
- la première électrode (12) a une section supérieure à celle de ladite empreinte (25) et porte uniquement sur le pourtour de ladite empreinte (25).

2. Procédé de soudage selon la revendication 1, caractérisé en ce que la durée de passage du courant est de l'ordre de la dixième de seconde avec une intensité de courant de l'ordre de 100.000 ampères et une pression de quelques centaines de decanewton.

3. Procédé de soudage selon la revendication 1 ou 2, caractérisé en ce que la deuxième pièce (14) en forme de plaque est conformée pour constituer sur la face postérieure une cavité (19) conjuguée et de section inférieure à celle du bossage (15) et une empreinte (25) en forme d'anneau de profondeur limitée entourant la cavité (19) et que la face postérieure de la deuxième pièce est mise en place sur la deuxième électrode (11) dont la section est supérieure à celle de ladite empreinte (25) et porte sur le pourtour de l'empreinte.

4. Procédé de soudage selon la revendication 1 ou 2, caractérisé en ce que la deuxième pièce (20) est mise en place sur une deuxième électrode (22) en forme d'étau qui enserre la deuxième pièce avec une force de compression assurant un bon contact mécanique et électrique.

## Claims

1. An assembly process by welding without filler metal of a first (16) and second (14, 20) solid copper pieces at least the first piece (16) of which is in the form of a plate or bar and presents a front face for assembly to the second piece (14, 20) and a rear face opposite the front face, comprising the following phases :
- shaping of the first piece (16) to form on said front face of the first piece a boss (17) and on said rear face of the first piece a conjugate cavity (19) of smaller cross section than that of the boss (17),
- shaping of the second piece (14, 20) to form a boss (15, 24) at a location for assembly to the first piece (16),
- placing the first piece (16) on a resistance welding press having a first (12) and second (11) copper-based electrodes, said front face facing the second electrode, and the rear face being applied against the first electrode,
- placing the second piece (14, 20) on the second electrode (11, 22) of the welding press, the two bosses being arranged in the axis of the press and brought into pin-point contact,
- heating of the two pieces by passing electrical current between the first (12) and second (11) electrodes so that the current passes via the first piece, via the two bosses in contact and via the second piece,
- compression of the two pieces by applying a pressure by the first and/or second electrode to flatten the two bosses and cause welding, characterized in that :
- the shaping phase of the first piece (16) comprises in addition achievement of a ring-shaped indentation (25) of limited depth surrounding said cavity (19), and
- the first electrode (12) has a cross-section greater than that of said indentation (25) and bears only on the circumference of said indentation (25).

2. The welding process according to claim 1, characterized in that the duration of the current flow is about one tenth of a second with a current intensity of about 100,000 amperes and a pressure of a few hundred decanewtons.

3. The welding process according to claim 1 or 2, characterized in that the second piece (14) in the form of a plate is shaped to form on the rear face a conjugate cavity (19) of smaller cross section than that of the projection (15) and a ring-shaped indentation (25) of limited depth surrounding the cavity (19) and that the rear face of the second piece is placed on the second electrode (11) whose cross-section is greater than that of said indentation (25) and bears on the circumference of the indentation.

4. The welding process according to claim 1 or 2, characterized in that the second piece (20) is placed on a second electrode (22) in the form of a clamp which squeezes the second piece with a compression force ensuring a good mechanical and electrical contact.

## Patentansprüche

1. Schweißverfahren zur Verbindung eines ersten (16) und eines zweiten (14, 20) massiven Kupferteils ohne Zusatzwerkstoff, wobei zumindest das erste Teil (16) in Form einer Platte oder Schiene vorliegt und eine Vorderseite zur Verbindung mit dem zweiten Teil (14, 20) sowie eine der Vorderseite gegenüberliegende Rückseite aufweist und das Verfahren aus folgenden Schritten besteht:
- Umformung des ersten Teils (16) zur Herstellung einer Auswölbung (17) auf der genannten Vorderseite des ersten Teils sowie einer entsprechenden Vertiefung (19) mit im Vergleich zur Auswölbung (17) geringerem Querschnitt auf der genannten Rückseite des ersten Teils,
- Umformung des zweiten Teils (14, 20) zur Herstellung einer Auswölbung (15, 24) an einer zur Verbindung mit dem ersten Teil (16) vorgesehenen Stelle,
- Einsetzen des ersten Teils (16) in eine Widerstandsschweißpresse mit einer ersten (12) und einer zweiten (11) auf Kupferbasis hergestellten Elektrode, wobei die genannte Vorderseite der zweiten Elektrode gegenüberliegt und die Rückseite gegen die erste Elektrode geführt wird,
- Aufsetzen des zweiten Teils (14, 20) auf die zweite Elektrode (11, 12) der Schweißpresse, derart daß die beiden Auswölbungen in der Längsachse der Presse liegen und punktförmig miteinander in Kontakt gebracht werden,
- Erwärmung der beiden Teile durch Herstellung eines elektrischen Stromflusses zwischen der ersten (12) und der zweiten (11) Elektrode, derart daß der Strom durch das erste Teil, die beiden in Kontakt befindlichen Auswölbungen und das zweite Teil fließt,
- Zusammenpressen der beiden Teile mittels eines durch die erste und/oder die zweite Elektrode aufgebrachten Drucks zur Stauchung der beiden Auswölbungen und Durchführung der Verschweißung,
dadurch gekennzeichnet, daß
- die Umformungsphase des ersten Teils (16) darüber hinaus die Herstellung eines die genannte Vertiefung (19) umgebenden, ringförmigen Eindrucks (25) von begrenzter Tiefe umfaßt und
- daß die erste Elektrode (12) einen größeren Querschnitt aufweist als der genannte Eindruck (25) und ausschließlich auf den um den genannten Eindruck (25) verlaufenden Randbereich wirkt.

2. Schweißverfahren nach Anspruch 1, dadurch gekennzeichnet, daß die Wirkdauer des Stroms etwa eine Zehntel Sekunde, bei einer Stromstärke in der Größenordnung von 100 000 A und einem Druck von einigen Hundert Dekanewton beträgt.

3. Schweißverfahren nach Anspruch 1 oder 2, dadurch gekennzeichnet, daß das plattenförmige zweite Teil (14) so ausgebildet ist, daß es an seiner Rückseite eine der Auswölbung (15) entsprechende und einen geringeren Querschnitt als diese aufweisende Vertiefung (19) sowie einen, die Vertiefung (19) umgebenden ringförmigen Eindruck (25) mit begrenzter Tiefe aufweist und daß die Rückseite des zweiten Teils auf die zweite Elektrode (11) aufgelegt wird, die einen größeren Querschnitt aufweist als der genannte Eindruck (25) und auf den Randbereich des Eindrucks wirkt.

4. Schweißverfahren nach Anspruch 1 oder 2, dadurch gekennzeichnet, daß das zweite Teil (20) in eine als Schraubstock ausgebildete zweite Elektrode (22) eingesetzt wird, in den das zweite Teil mit einer Druckkraft eingeklemmt wird, die einen guten mechanischen und elektrischen Kontakt gewährleistet.
